(19) Europäisches Patentamt
European Patent Office
Office européen des brevets

(11) **EP 0 759 654 B1**

(12) **EUROPEAN PATENT SPECIFICATION**

(45) Date of publication and mention
of the grant of the patent:
**26.10.2005 Bulletin 2005/43**

(51) Int Cl.⁷: **H02M 3/337**

(21) Application number: **96304442.5**

(22) Date of filing: **14.06.1996**

(54) **Switching power converter with continuous input and output current**

Schaltleistungswandler mit kontinuierlichen Eingangs- und Ausgangsstrom

Convertisseur à découpage avec courant d'entrée et courant de sortie continus

(84) Designated Contracting States:
**CH DE FR IT LI NL SE**

(30) Priority: **18.08.1995 GB 9516913**

(43) Date of publication of application:
**26.02.1997 Bulletin 1997/09**

(73) Proprietor: **ADVANCED POWER CONVERSION
LIMITED
Farborough, Hampshire, GU14 ONR (GB)**

(72) Inventor: **Rodulfo, Philip
Norwich, Norfolk, NR9 4AP (GB)**

(74) Representative: **Harman, Michael Godfrey
Hillgate Patent Services,
No. 6 Aztec Row,
Berners Road
Islington, London N1 0PW (GB)**

(56) References cited:
**US-A- 4 184 197          US-A- 4 257 087
US-A- 4 961 128**

## Description

The present invention relates to a converter, typically for a power supply for supplying a continuous output current, from a continuous input current, with particular applications, amongst others, as power supplies for example in automotive or telecoms applications.

Transformers used in electrical and electronic applications for "transforming" an input voltage to a higher or lower voltage (and often referred to as "Boost" and "Buck" converters respectively) are well known to persons skilled in the art. A problem with known transformers is to provide assemblies which operate with both continuous input and output currents. This is possible with a series of boost and buck converters, but a simple cascade of these two has an increased component count and additionally complex to drive the devices.

A type of DC-to-DC converter which operates with continuous input and output currents is described in US 4 184 197 (Cuk et al) and is commonly referred to as a Cuk converter. The Cuk converter is a single ended converter which has a capacitor in series with the output to provide the continuous output current when the switching device is on. This capacitor is subjected to high ripple currents and is a critical and expensive component. Some forms of the Cuk converter include transformer coupling providing transformer isolation between the input and output.

Further DC-to-DC converters are shown in Figs. 10a and 10b of US 4 257 087 (Cuk). These circuits, which provide transformer isolation between the input and output are somewhat similar to the Cuk converter, but have the capacitor on the input side and are single sided. More specifically, the input side of the Fig. 10a circuit comprises an inductor connected through a capacitor to the primary of a transformer. A transistor operating as a switch is connected in parallel with the capacitor/primary winding circuit. The transformer has a secondary winding with a conventional diode rectifier and smoothing capacitor.

According to the present invention there is provided a converter for providing a continuous output current from a continuous input current, the converter comprising a primary side and a secondary side coupled together magnetically by a core assembly:

the primary side comprising a pair of primary circuits and a common transformer winding, each primary circuit comprising a primary choke winding connected at one end to a common supply point, a capacitor having its first side connected to the other end of the respective primary choke winding, and switching means comprising first and second primary switching elements connecting the first and second sides respectively of the capacitor to a common return point, and the common primary transformer winding being connected between the ends of the capacitors remote from the primary choke windings; the secondary side comprising first and second secondary switching elements connected to a common output point and operating to conduct in the same direction relative to that output point, first and second secondary choke windings connecting the first and second secondary switching elements respectively to a second common output point and magnetically coupled to respective primary choke windings, and a secondary common transformer winding connected between the junctions of the secondary switching elements and the secondary choke windings; and

the primary switching means being operated in a 4-phase cycle to generate a continuous output voltage in which one of the first primary switching elements is closed for the first phase and open for the remaining phases, the other first primary switching element is closed for the third phase and open for the remaining phases, and the second switching element of each primary circuit is closed when the corresponding first primary switching element is open;

whereby each secondary choke winding contributes to the output voltage during the 3 phases in which the corresponding first primary switching element is open, and the secondary common transformer winding additionally contributes to the output voltage during the first and third phases.

This has the advantage of providing a converter in which a continuous output current is provided for a continuous input current without the need for an increased component count or for a series - coupled output capacitor which is subject to the high ripple current discussed above. It allows twice the flux excursion, and, hence improved utilisation of the core assembly. No snubbering components are required on the primary switches which increases the efficiency of the converter. The low component count also has the added advantage of reduced manufacturing cost.

An embodiment of the present invention will now be described, by way of example only with reference to the accompanying drawings, of which:

Figure 1 is schematic circuit diagram of a transformer assembly according to the present invention;

Figure 2 is a schematic representation of the transformer assembly of Figure 1 during a first part of the operating cycle, and illustrating the flow of magnetic flux;

Figure 3 is a schematic representation of the transformer assembly of Figure 1 during a second and fourth part of the operating cycle, and illustrating the flow of magnetic flux; and

Figure 4 is a schematic representation of the transformer assembly of Figure 1 during a part of the operating cycle, and illustrating the flow of magnetic flux;

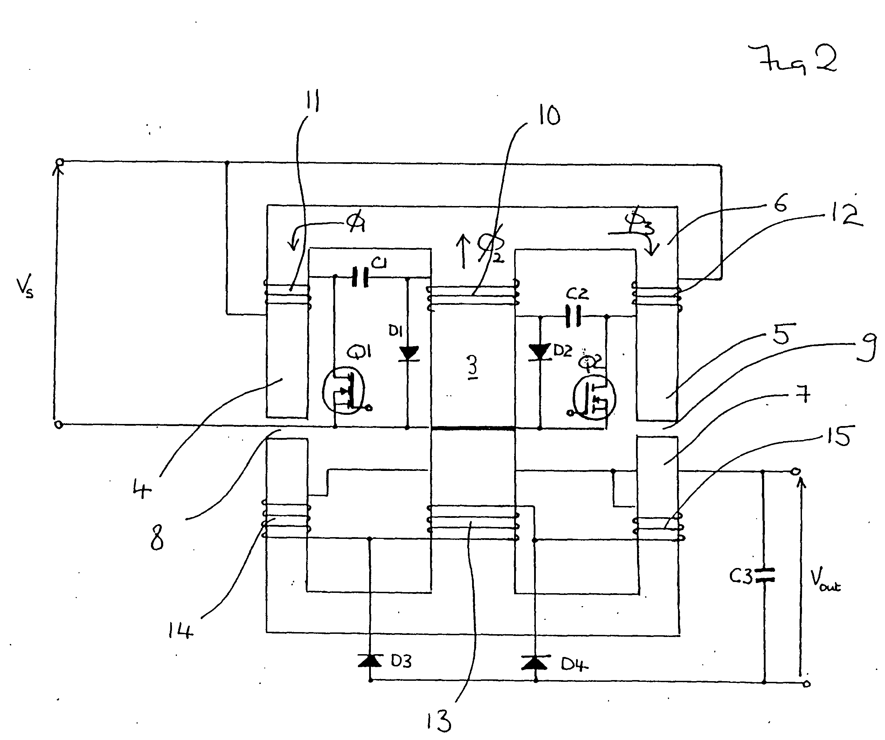

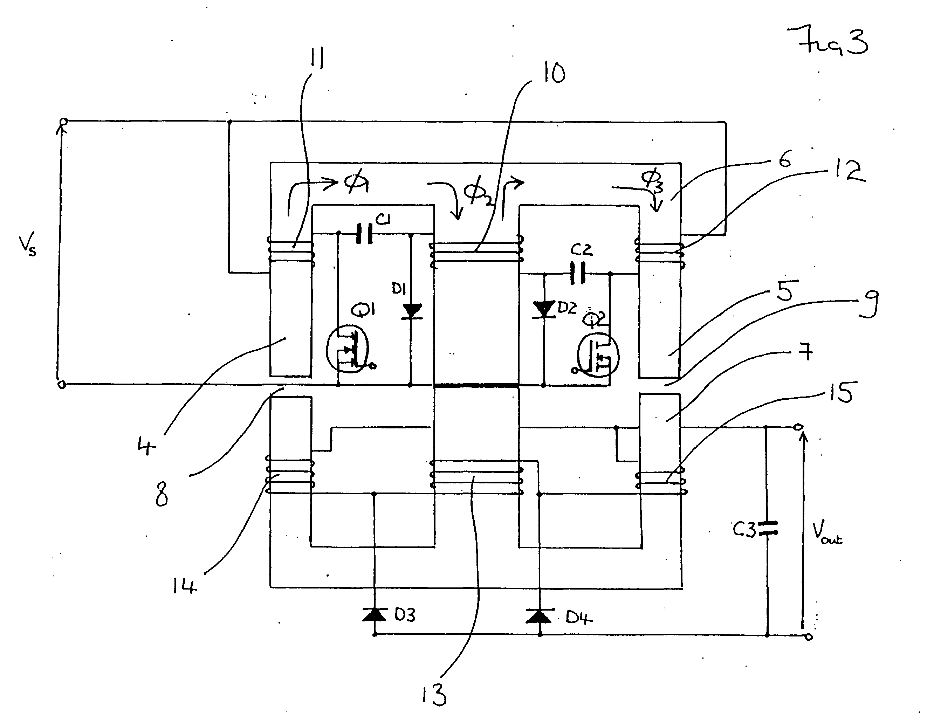

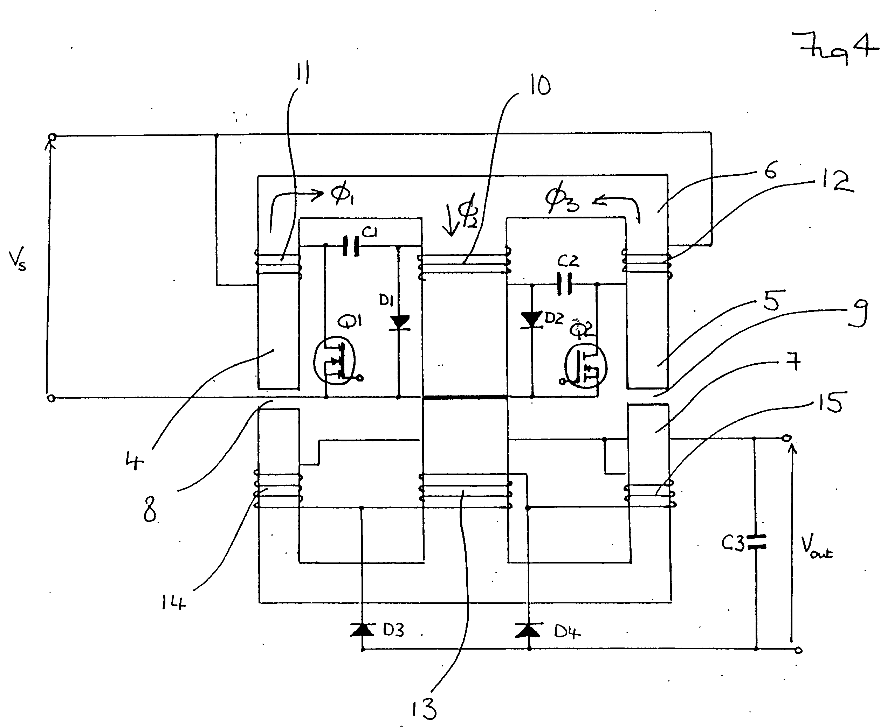

The converter comprises a transformer assembly 1 having a ferrite core 2. The ferrite core 2 comprises two E - Shaped core pieces 6,7 to provide a core assembly having a centre transformer limb 3, and two outer choke limbs 4,5 as illustrated in figure 2 to 4. Air gaps 8,9 are provided in the outer limbs 4,5 to form the choke. As is well known to persons skilled in the art, the gaps 8,9 are provided to store energy, thereby acting as the choke. Primary and secondary transformer and choke windings 10,11,12,13,14,15 are provided on the respective centre and outer limbs 3,4,5.

The provision of chokes in transformers are, in themselves, well known to persons skilled in the art.

The primary transformer winding 10 is wound around the centre limb 3, and is coupled in series to two primary choke windings 11,12 wound around respective outer limbs 4,5 as illustrated in Figures 2 to 4. Similarly, respective secondary transformer and choke windings 13,14,15 are wound around the centre limb 3 and two outer limbs 4,5 so as to be electro - magnetically coupled to the respective primary windings 10,11,12.

Primary capacitors C1 and C2 are series coupled between the first primary choke winding 11 and the primary transformer winding 10, and between the primary transformer winding 10 and the second primary choke winding 12, respectively. Two primary switches Q1 and Q2 are provided in the primary circuit coupled between the transformer winding 10 and the respective choke windings 11,12. The switches Q1 and Q2 are MOSFETS, which are operable in a conventional manner as is well known to persons skilled in the art. Two primary circuit diodes D1 and D2 are also provided in parallel to the two switches Q1 and Q2.

An input voltage $V_s$ is coupled to the primary circuit comprising the primary windings 10,11,12.

The input voltage $V_s$, and the output voltage $V_{out}$ are coupled to and from the transformer assembly 1 in a known manner.

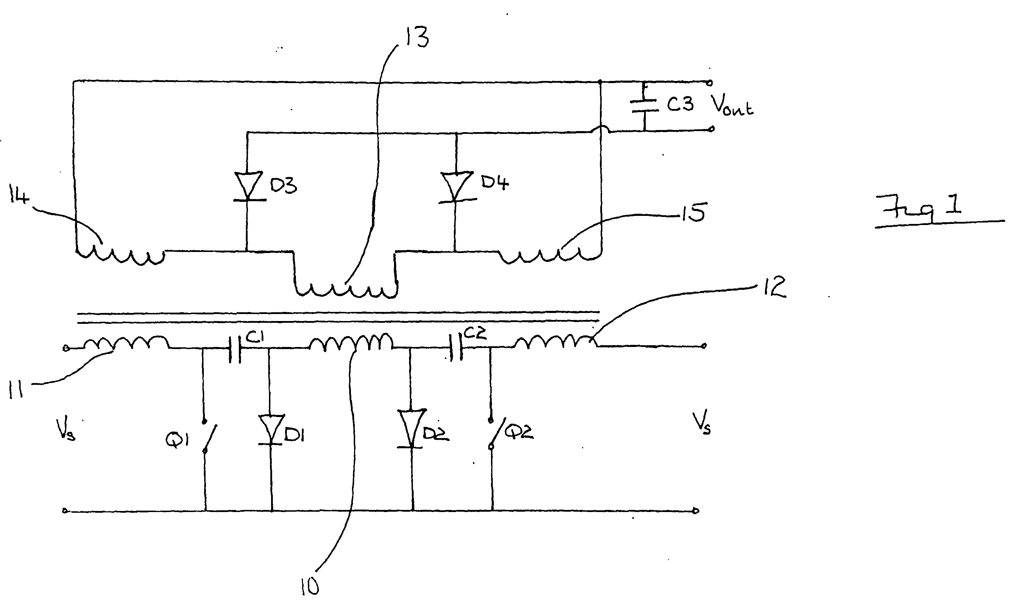

In the secondary circuit, two secondary circuit diodes D3 and D4 are provided coupled between the secondary transformer winding 13 and the respective secondary choke windings 14,15, and a secondary circuit capacitor C3 is coupled across the output. All this is illustrated in Figures 1 to 4. The secondary capacitor C3 is provided for smoothing.

In use, an input voltage, $V_s$, is supplied to the primary circuit across the primary windings, and the power switches Q1 and Q2 are cyclically switched on and off so that in one period Q1 is "on" and Q2 is "off", then, in the second period, both Q1 and Q2 are "off", then, in the third period, Q1 is still "off" while Q2 is "on", and then finally, in the fourth period, both Q1 and Q2 are "off" again - and so on. The switches Q1 and Q2 are, as said before are conventional MOSFETS pulse modulated to suit the operation.

Generally, for a Boost - Buck converter, the transfer ratio is given by:

$$V_{out} = (V_{in}/n).(D/(1-D))$$

where n is the ratio of primary turns, n1, to secondary turns, n2;

$V_{out}$ is the output voltage;

$V_{in}$ is the input voltage; and

where D is the duty cycle, that is the ratio of the "on" period of the power switch of the transformer, $T_{on}$, to the total period of the cycle, $T = T_{on} + Toff$, so:

$$D = T_{on}/T$$

Therefore, the transfer ratio becomes:

$$V_{out} = (V_{in}/n).(T_{on}/T_{off})$$

$$= (V_{in}.x)/n$$

where $x = T_{on}/T_{off}$

In the embodiment described herein, all the primary windings 10,11,12 have the same number of turns, n1, and all the secondary windings 13,14,15 have the same number of turns, n2.

Transformer windings and cores are, in themselves, well known to persons skilled in the art, and need not be described in any further detail herein, except as is relevant to the present invention. In the embodiment described herein, the transformer core and the windings are made of known materials and constructed in a known manner, for example, the core is made of ferrite.

The turns ratio is selected depending upon the input voltage and the required output voltage as with known transformers.

The "on" and "off" periods for the switches Q1 and Q2 will be the same, and the duty cycle, D, is modulated using conventional pulse modulation techniques by control means (not shown) coupled to the switches Q1,Q2 to ensure that the output voltage is kept constant.

Let us consider the first period when MOSFET Q1 is on, and MOSFET Q2 is off. During this period, in the primary section of the transformer assembly 1, the capacitor C1 is discharging through the primary winding 10, diode D1 is reversed biased and diode D2 is forward biased. The left - hand side limb 4 i.e of the choke (as viewed in Figures 2 to 4) will be storing flux.

The magnetic flux flowing through the transformer assembly 1 is given as follows:

$$\Phi_2 = \Phi_1 + \Phi_3$$

where $\Phi_1$, $\Phi_2$, and $\Phi_3$ are the flux in the left - hand limb 4, centre limb 3, and right - hand limb 5 of the transformer core respectively.

The flow of the flux is illustrated in Figures 2 to 4 by the arrows.

For an input voltage $V_s$, the voltage across the primary choke winding 11 on the left - hand limb 4 will be $V_s$, and, therefore, using Faraday's Law:

$$\Phi_1 \; \alpha \; V_s/n1$$

where n1 is the number of primary turns, and $\alpha$ a proportionality factor.

Assuming a charge on C1 of $V_s(1 + x)$ from the previous switching cycle - the derivation of which is given below with respect to the second part of the switching cycle in which both the MOSFET's are off, then, because C1 is discharging through the primary winding 10, then the voltage across this primary winding 10 will be $V_s(1 + x)$, and, therefore, again from Faraday's Law:

$$\Phi_2 \; \alpha \; V_s(1 + x)/n1$$

We can see, therefore, that the flux $\Phi_3$ flowing through the right - hand limb 5 is:

$$\alpha \; V_s(1 + x)/n1 - V_2/n1$$

$$\alpha \; V_s.x/n1$$

Now, in the secondary section of the transformer, the diode D3 is reverse biased, and diode D4 is forward biased, and the output voltage $V_{out}$ is derived from the summation of the secondary voltages in the left - hand limb 4 and the centre limb 3, and <u>directly</u> from the right - hand limb 5.

Now, the voltage across the right - hand secondary choke winding 15 is

$$= n2.\Phi_3$$

$$= (n2/n1).V_s.x$$

The voltage across the left - hand secondary choke winding 14 is

$$= n2.\Phi_1$$

$$= (n2/n1).V_s$$

The voltage of the secondary transformer winding 13 is

$$= n2.\Phi_2$$

$$= (n2/n1).V_s(1 + x)$$

Therefore,

$$V_{out} = (n2/n1).V_s \; (1 + x) - (n2/n1).V_s$$

$$= (n2/n1).V_s.x$$

Now let us consider the second period in which MOSFET Q1 is off and MOSFET Q2 is also off. In this period, the diodes D1 and D2 are forward biased and conducting, and the flux is solely confined to the two outer limbs 4,5 i.e to the choke, with zero net flux flowing in the centre transformer limb 3. In the secondary section, the two diodes D3 and D4 are also forward biased and conducting, thereby clamping the voltage across the secondary transformer winding 13 at zero volts.

Now, under stable operating conditions, the volts per second area over a complete switching cycle must equate to zero, and, therefore, $V_s.T_{on} = V_{choke}.T_{off}$ where $V_{choke}$ is the voltage across a choke winding.

Therefore, in the primary section of the transformer assembly, the voltage across the left - hand choke winding 11,

$$V_{left \; choke} = V_s.T_{on}/T_{off}$$

$$= V_s.x$$

In this part of the switching cycle, the two diodes D1 and D2 are forward biased and conducting, therefore the two primary capacitors C1 and C2 are being charged to a value $V_s + V_{left}$ choke $= V_s + V_s.x$, which is equal to $V_s(1 + x)$ as we stated above.

Now, $\Phi_2$ is zero, and , therefore,

$$\Phi_1 = \Phi_3$$

Again, from Faraday's Law:

$$\Phi_1 \; \alpha \; V_{left \; choke}./n1$$

$$\alpha \; V_s.x/n1$$

and, therefore

$$\Phi_3 \; \alpha \; V_s.x/n1$$

In this period, the output voltage $V_{out}$ is derived from the secondary voltages across the two secondary choke windings 14, 15, i.e it is therefore proportional to the flux $\Phi_1$ and $\Phi_2$ through those windings and, therefore,

$$V_{out} \: \alpha \: \Phi_1 \: \alpha \: \Phi_2$$

Therefore,

$$V_{out} = (n2/n1).V_s.x$$

In the next period, MOSFET Q1 is off and MOSFET Q2 is on. This is similar to the period when Q1 is on and Q2 is off with the exception that the phasing of the right - hand primary winding 5 is selected to cause a flux reversal in the centre transformer limb 3, so that:

$$V_{out} = (n2/n1).V_s.x$$

And, finally, in the next period, both the MOSFET's Q1 and Q2 are off again, which is identical to the earlier period described above, and the output is supplied from the outside choke limbs.

As we can see, this converter operates in a do - called " push - pull" manner to provide a continuous output current generated from a continuous input current during the complete operating cycle.

As will be obvious to a person skilled in the art, various modifications are possible within the scope of the present invention. For example different core configurations may be used, for example an E - shaped and a, so called, I - shaped core piece could be used. Other switching devices could be used rather than MOSFET's, and the secondary diodes could be replaced by MOSFET's. Multiple additional windings could be provided, and the primary winding could be used with the appropriate circuitry.

**Claims**

1. A converter for providing a continuous output current from a continuous input current, the converter comprising a primary side and a secondary side coupled together magnetically by a core assembly:

   the primary side comprising a pair of primary circuits and a common transformer winding (10), each primary circuit comprising a primary choke winding (11,12) connected at one end to a common supply point (Vs), a capacitor (C1,C2) having its first side connected to the other end of the respective primary choke winding, and switching means comprising first (Q1,Q2) and second (D1,D2) primary switching elements connecting the first and second sides respectively of the capacitor to a common return point (Vs), and the common primary transformer winding (10) being connected between the ends of the capacitors remote from the primary choke windings;
   the secondary side comprising first and second secondary switching elements (D3,D4) connected to a common output point (Vout) and operating to conduct in the same direction relative to that output point, first and second secondary choke windings (14,15) connecting the first and second secondary switching elements (D3,D4) respectively to a second common output point (Vout) and magnetically coupled to respective primary choke windings (11,12), and a secondary common transformer winding (13) connected between the junctions (D3-14,D4-15) of the secondary switching elements and the secondary choke windings; and
   the primary switching means being operated in a 4-phase cycle to generate a continuous output voltage in which one of the first primary switching elements (Q1) is closed for the first phase and open for the remaining phases, the other first primary switching element (Q2) is closed for the third phase and open for the remaining phases, and the second switching element (D1,D2) of each primary circuit is closed when the corresponding first primary switching element (Q1, Q2) is open;
   whereby each secondary choke winding contributes to the output voltage during the 3 phases in which the corresponding first primary switching element is open, and the secondary common transformer winding additionally contributes to the output voltage during the first and third phases.

2. A converter according to claim 1 wherein the ratio of the time period for which the first primary switching elements are on and the period for which they are off is variable.

3. A converter according to either previous claim wherein the first and second primary switching elements are respectively transistors and diodes.

4. A converter according to any previous claim wherein the secondary switching elements are transistors.

5. A converter according to any of claims 1 to 3 wherein the secondary switching elements are diodes.

6. A converter according to any previous claim wherein the core assembly comprises a centre limb (3) and two outer limbs (4,5) all connected in parallel, the centre limb (3) carrying the common primary (10) and secondary (13) transformer windings, and each outer limb (4,5) carrying a respective primary choke (11,12) and associated secondary choke (14,15) winding, each outer limb having a respective air gap (8,9) therein.

**Patentansprüche**

1. Schaltleistungswandler zur Erzeugung eines kontinuierlichen Ausgangsstroms aus einem kontinuierlichen Eingangsstrom, wobei der Schaltleistungswandler eine Primärseite und eine Sekundärseite aufweist, die über einen Kernzusammenbau magnetisch miteinander gekoppelt sind;

die Primärseite ein Primärschaltkreispaar und eine gemeinsame Transformatorwicklung (10) aufweist, jeder Primärschaltkreis eine Primär-Drosselwicklung (11,12) besitzt, die an einem Ende mit einem gemeinsamen Einspeisungspunkt (Vs) verbunden ist, einen Kondensator (C1, C2), dessen erste Seite mit dem anderen Ende der jeweiligen Primär-Dosselwicklung verbunden ist, sowie Schaltmittel mit ersten (Q1, Q2) und zweiten (D1, D2) Primärschaltelementen, die die ersten bzw. zweiten Seiten des Kondensators mit einem gemeinsamen Rückleitungspunkt (Vs) verbinden und die gemeinsame Primär-Transformatorwicklung (10) zwischen den Enden der Kondensatoren entfernt von den Primär-Drosselwicklungen angeschlossen ist;

die Sekundsärseite erste und zweite Sekundärschaltelemente (D3, D4) aufweist, die mit einem gemeinsamen Ausgangspunkt (Vout) verbunden sind und die Leitung in die gleiche Richtung relativ zu diesem Ausgangspunkt bewirken, erste und zweite Sekundär-Drosselwicklungen (14, 15), die die ersten bzw. zweiten Sekundärschaltelemente (D3, D4) mit einem zweiten, gemeinsamen Ausgangspunkt (Vout) verbinden und magnetisch mit den jeweiligen Primär-Drosselwicklungen (11, 12) gekoppelt sind, sowie eine gemeinsame Sekundär-Transformatorwicklung (13) die zwischen den Verbindungsstellen (D3-14, D4-15) der Sekundärschaltelemente und der Sekundär-Drosselwicklungen angeschlossen ist; und

die Primärschaltmittel zur Generierung einer kontinuierlichen Ausgangsspannung in einem 4-Phasen-Takt betrieben werden, wobei eines der ersten Primärschaltelemente (Q1) während der ersten Phase gesperrt und während der verbleibenden Phasen geöffnet ist, das andere erste Primärschaltelement (Q2) während der dritten Phase gesperrt und während der verbleibenden Phasen geöffnet ist, und das zweite Schaltelement (D1, D2) einer jeden Primärschaltung gesperrt ist, wenn das entsprechende erste Primärschaltelement (Q1, Q2) geöffnet ist;

so dass jede Sekundär-Drosselwicklung während der 3 Phasen einen Beitrag zur Ausgangsspannung leistet, während derer das entsprechende erste Primärschaltelement geöffnet ist und die gemeinsame Sekundär-Transformatorwicklung während der ersten und dritten Phasen einen zusätzlichen Beitrag zur Ausgangsspannung liefert.

2. Schaltleistungswandler gemäß Anspruch 1, bei dem das Verhältnis zwischen dem Zeitraum, über den die ersten Primärschaltelemente eingeschaltet sind und dem Zeitraum, über den sie ausgeschaltet sind, veränderbar ist.

3. Schaltleistungswandler gemäß einem der beiden vorhergehenden Ansprüche, bei dem es sich bei den ersten und zweiten Primärschaltelementen um Transistoren bzw. Dioden handelt.

4. Schaltleistungswandler gemäß einem beliebigen der vorhergehenden Ansprüche, bei dem es sich bei den Sekundärschaltelementen um Transistoren handelt.

5. Schaltleistungswandler gemäß einem beliebigen der Ansprüche 1 bis 3, bei dem es sich bei den Sekundärschaltelementen um Dioden handelt.

6. Schaltleistungswandler gemäß einem beliebigen der vorhergehenden Ansprüche, bei dem der Kernzusammenbau einen mittleren Schenkel (3) und zwei äußere Schenkel (4,5) aufweist, die alle parallelgeschaltet sind, der mittlere Schenkel (3) die gemeinsamen Primär- (10) und Sekundär- (13) -Transformatorwicklungen trägt, und jeder äußere Schenkel (4,5) die entsprechende Primär-Drosselwicklung (11, 12) und eine zugehörige Sekundär-Drosselwicklung (14, 15) trägt und jeder äußeren Schenkel einen entsprechenden Luftspalt (8,9) aufweist.

**Revendications**

1. Convertisseur destiné à procurer un courant de sortie continu à partir d'un courant d'entrée continu, le convertisseur comportant un côté primaire et un côté secondaire accouplés ensemble de manière magnétique par un ensemble de type noyau :

le côté primaire comportant une paire de circuits primaires et un enroulement de transformateur commun (10), chaque circuit primaire comportant un enroulement inductif primaire (11, 12) connecté au niveau d'une extrémité à un point d'alimentation commun (Vs), un condensateur (C1, C2) ayant son premier côté connecté à l'autre extrémité de l'enroulement inductif primaire respectif, et des moyens de commutation comportant des premiers (Q1, Q2) et deuxièmes (D1, D2) éléments de commutation primaires destinés à connecter le premier côté et le deuxième côté respectivement du condensateur à un point de retour commun (Vs), et l'enroulement de transformateur primaire commun (10) étant connecté entre les extrémités des condensateurs à distance des enroulements inductifs primaires ;

le côté secondaire comportant un premier élément de commutation secondaire et un deuxième élément de commutation secondaire (D3, D4) connectés à un point de sortie commun (Vout) et fonctionnant pour conduire dans la même direction par rapport à ce point de sortie, le premier enroulement inductif secondaire et le deuxième enroulement inductif secondaire (14, 15) connectant le premier élément de commutation secondaire et le deuxième élément de commutation secondaire (D3, D4) respectivement à un deuxième point de sortie commun (Vout) et accouplés de manière magnétique aux enroulements inductifs primaires respectifs (11, 12), et un enroulement de transformateur commun secondaire (13) connecté entre les jonctions (D3-14, D4-15) des éléments de commutation secondaires et des enroulements inductifs secondaires ; et

les moyens de commutation primaires étant actionnés en un cycle à 4 phases pour produire une tension de sortie continue, cycle dans lequel un des premiers éléments de commutation primaires (Q1) est fermé au cours de la première phase et ouvert au cours des autres phases, l'autre premier élément de commutation primaire (Q2) est fermé au cours de la troisième phase et ouvert au cours des autres phases, et le deuxième élément de commutation (D1, D2) de chaque circuit primaire est fermé quand le premier élément de commutation primaire correspondant (Q1, Q2) est ouvert ;

ce par quoi, chaque enroulement inductif secondaire contribue à la tension de sortie au cours des 3 phases au cours desquelles le premier élément de commutation primaire correspondant est ouvert, et l'enroulement de transformateur commun secondaire contribue en plus à la tension de sortie au cours de la première phase et de la troisième phase.

2. Convertisseur selon la revendication 1, dans lequel le rapport entre le délai au cours duquel les premiers éléments de commutation primaires sont actifs (on) et le délai au cours duquel ils sont inactifs (off) est variable.

3. Convertisseur selon l'une quelconque des deux revendications précédentes, dans lequel le premier élément de commutation primaire et le deuxième élément de commutation primaire sont respectivement des transistors et des diodes.

4. Convertisseur selon l'une quelconque des revendications précédentes, dans lequel les éléments de commutation secondaires sont des transistors.

5. Convertisseur selon l'une quelconque des revendications 1 à 3, dans lequel les éléments de commutation secondaires sont des diodes.

6. Convertisseur selon l'une quelconque des revendications précédentes, dans lequel l'ensemble de type noyau comporte une branche centrale (3) et deux branches extérieures (4, 5), toutes connectées en parallèle, la branche centrale (3) portant l'enroulement de transformateur commun primaire (10) et l'enroulement de transformateur commun secondaire (13), et chaque branche extérieure (4, 5) portant respectivement un enroulement inductif primaire (11, 12) et un enroulement inductif secondaire associé (14, 15), chaque branche extérieure ayant en elle un entrefer respectif (8, 9).

Fig 1

EP 0 759 654 B1

Fig 2

EP 0 759 654 B1

Fig 3

EP 0 759 654 B1

Fig 4